# EUROPEAN PATENT SPECIFICATION

(11) **EP 4 280 711 B1**
(45) Date of publication and mention of the grant of the patent: **30.09.2026**
(21) Application number: 23718610.1
(22) Date of filing: 04.04.2023
(51) Int. Cl.: H04W 52/02, H04W 52/30, H04W 76/28, H04B 1/3827, G06F 1/3228

(54) **ELECTRONIC DEVICE, AND METHOD FOR REDUCING CURRENT CONSUMPTION**
ELEKTRONISCHE VORRICHTUNG UND VERFAHREN ZUR REDUZIERUNG DES STROMVERBRAUCHS
DISPOSITIF ÉLECTRONIQUE ET PROCÉDÉ DE RÉDUCTION DE CONSOMMATION DE COURANT

(30) Priority: 05.04.2022 KR 20220042131 U; 10.06.2022 KR 20220070860 U
(43) Date of publication of application: 22.11.2023
(73) Proprietor: Samsung Electronics Co., Ltd., Suwon-si, Gyeonggi-do 16677 (KR)
(72) Inventor: CHO, Woosik, Suwon-si, Gyeonggi-do 16677 (KR); SIM, Myungsub, Suwon-si, Gyeonggi-do 16677 (KR)
(74) Representative: Arnold & Siedsma
(86) International application number: PCT/KR2023/004498
(87) International publication number: WO 2023/195728

(56) References cited:
- EP-A1- 2 816 442
- EP-A2- 2 487 967
- KR-A- 20180 025 710
- KR-A- 20200 048 228
- KR-A- 20220 023 160
- KR-B1- 102 139 110
- US-A1- 2020 218 310

## Description

### [Technical Field]

The disclosure relates to an electronic device and to a method for improving current consumption by using the electronic device.

### [Background Art]

With the development of mobile communication technology and hardware/software technology, a portable electronic device (hereinafter, electronic device) may implement various functions in addition to a call function in the related art. The electronic device may include a plurality of processors that perform various functions. For example, the processors may include an application processor (AP) and a communication processor (CP). The electronic device may perform various functions by using a communication connection between the AP and the CP.

The electronic device may emit electromagnetic waves in a process in which the electronic device communicates with a base station by using the CP. The emitted electromagnetic waves may be absorbed into a human body or an animal body, and the thermal action that is generated by the electromagnetic waves absorbed into the human body may be quantitatively expressed as a specific absorption rate (SAR). The electronic device may execute and control a power back-off so that the specific absorption rate becomes lower than a predetermined numerical value by controlling the power (Tx power) of the electromagnetic waves being transmitted.

### [Disclosure of Invention]

### [Technical Problem]

In the electronic device in the related art, for example EP2816442 and EP2487967, a grip signal for recognizing a human body may be configured to be always transferred to a communication processor through an application processor. If the grip signal is input even in a state where the electronic device is not used for a predetermined time and thus the application processor enters a sleep mode, the sleep mode may be released, and the application processor may wake up to receive the grip signal and transfer a corresponding message to the communication processor. Accordingly, even in case that a user's unintended touch occurs or the SAR numerical value has no problem and thus the power back-off is not necessary, the sleep mode of the application processor is released, and thus current consumption is increased.

Various embodiments of the disclosure provide a method for improving current consumption of the electronic device by controlling the sleep mode of the application processor not to be released in a situation in which the power back-off of the electronic device is not necessary.

### [Solution to Problem]

According to a first aspect an electronic device according to claim 1 is provided. According to a second aspect a method according to claim 8 is provided.

### [Advantageous Effects of Invention]

According to various exemplary embodiments, the electronic device can improve the current consumption of the electronic device by preventing frequent wakeup due to the grip signal in a situation where the power back-off of the communication processor is not necessary in the sleep mode of the application processor.

Other effects that can be obtained or predicted according to various exemplary embodiments of the electronic device will be disclosed directly or implicitly in the following detailed description of the exemplary embodiments of the electronic device. For example, various effects that are predicted according to the various exemplary embodiments of the electronic device will be disclosed within the following detailed description.

### [Brief Description of Drawings]

FIG. 1 is a block diagram of an electronic device in a network environment according to various exemplary embodiments.
FIG. 2 is a block diagram illustrating a power management module and a battery according to an exemplary embodiments.
FIG. 3 is a block diagram illustrating communications among an application processor, a communication processor, and a grip sensor according to various exemplary embodiments.
FIG. 4 is a block diagram of an electronic device according to various exemplary embodiments.
FIG. 5 is a graph illustrating current consumption of an electronic device in accordance with a sleep mode and a wakeup of an application processor according to various exemplary embodiments.
FIG. 6 is a diagram illustrating power consumption of an electronic device in a C-DRX section according to various exemplary embodiments.
FIG. 7 is a diagram illustrating an operating section in accordance with a data communication method in a TDD band according to various exemplary embodiments.
FIG. 8 is a flowchart of a method for improving current consumption of an electronic device according to various exemplary embodiments.

### [Mode for the Invention]

Hereinafter, exemplary embodiments of the disclosure will be described in detail with reference to the accompanying drawings.

In describing the exemplary embodiments, description of technical contents that are well known in the technical field to which the disclosure pertains and are not directly related to the disclosure will be omitted. Further, detailed description of constituent elements having substantially the same constitutions and functions will be omitted.

For the same reason, in the accompanying drawings, some constituent elements are exaggerated, omitted, or briefly illustrated, and sizes of the respective constituent elements do not completely reflect the actual sizes thereof. Accordingly, the disclosure is not limited by such a relative size or spacing illustrated in the accompanying drawings.

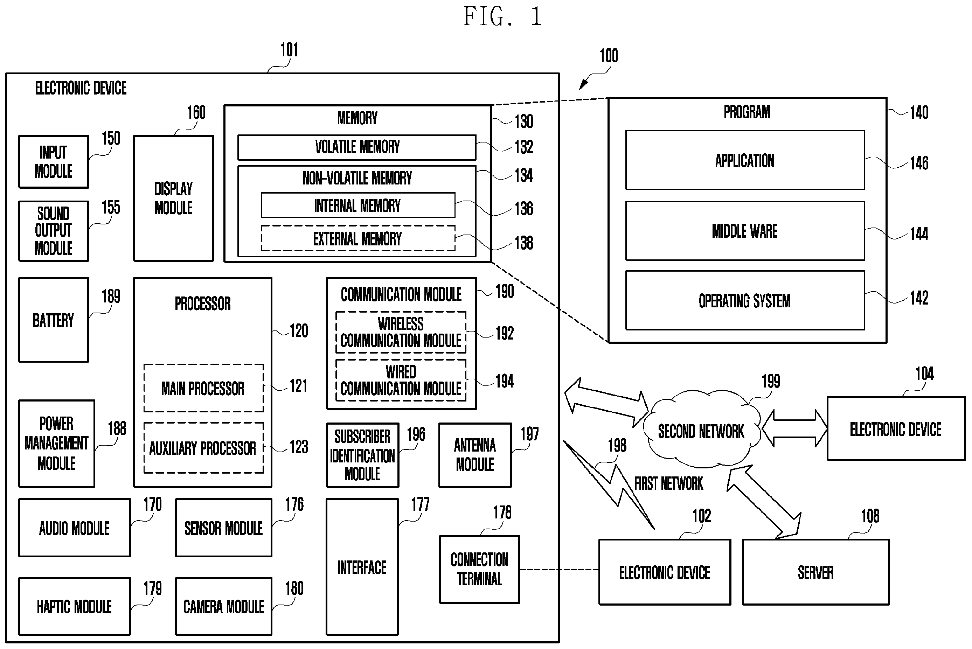

Fig. 1 is a block diagram illustrating an electronic device 101 in a network environment 100 according to various exemplary embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an exemplary embodiment, the electronic device 101 may communicate with the electronic device 104 via the server 108. According to an exemplary embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an exemplary embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an exemplary embodiment, the auxiliary processor 123 (e.g., an image signal processor or a communication processor) may be implemented as part of another component (e.g., the camera module 180 or the communication module 190) functionally related to the auxiliary processor 123. According to an exemplary embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an exemplary embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an exemplary embodiment, the display module 160 may include a touch sensor adapted to detect a touch, or a pressure sensor adapted to measure the intensity of force incurred by the touch.

The audio module 170 may convert a sound into an electrical signal and vice versa. According to an exemplary embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an exemplary embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an exemplary embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an exemplary embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an exemplary embodiment, the haptic module 179 may include, for example, a motor, a piezoelectric element, or an electric stimulator.

The camera module 180 may capture a still image or moving images. According to an exemplary embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an exemplary embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an exemplary embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an exemplary embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an exemplary embodiment, the antenna module 197 may include an antenna including a radiating element composed of a conductive material or a conductive pattern formed in or on a substrate (e.g., a printed circuit board (PCB)). According to an exemplary embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an exemplary embodiment, another component (e.g., a radio frequency integrated circuit (RFIC)) other than the radiating element may be additionally formed as part of the antenna module 197.

According to various exemplary embodiments, the antenna module 197 may form a mmWave antenna module. According to an exemplary embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an exemplary embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an exemplary embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an exemplary embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various exemplary embodiments may be one of various types of electronic devices. The electronic devices may include, for example, a portable communication device (e.g., a smartphone), a computer device, a portable multimedia device, a portable medical device, a camera, a wearable device, or a home appliance. According to an exemplary embodiment of the disclosure, the electronic devices are not limited to those described above.

It should be appreciated that various exemplary embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various exemplary embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an exemplary embodiment, the module may be implemented in a form of an application-specific integrated circuit (ASIC).

Various exemplary embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an exemplary embodiment, a method according to various exemplary embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various exemplary embodiments, each component (e.g., a module or a program) of the above-described components may include a single entity or multiple entities, and some of the multiple entities may be separately disposed in different components. According to various exemplary embodiments, one or more of the above-described components may be omitted, or one or more other components may be added. Alternatively or additionally, a plurality of components (e.g., modules or programs) may be integrated into a single component. In such a case, according to various exemplary embodiments, the integrated component may still perform one or more functions of each of the plurality of components in the same or similar manner as they are performed by a corresponding one of the plurality of components before the integration. According to various exemplary embodiments, operations performed by the module, the program, or another component may be carried out sequentially, in parallel, repeatedly, or heuristically, or one or more of the operations may be executed in a different order or omitted, or one or more other operations may be added.

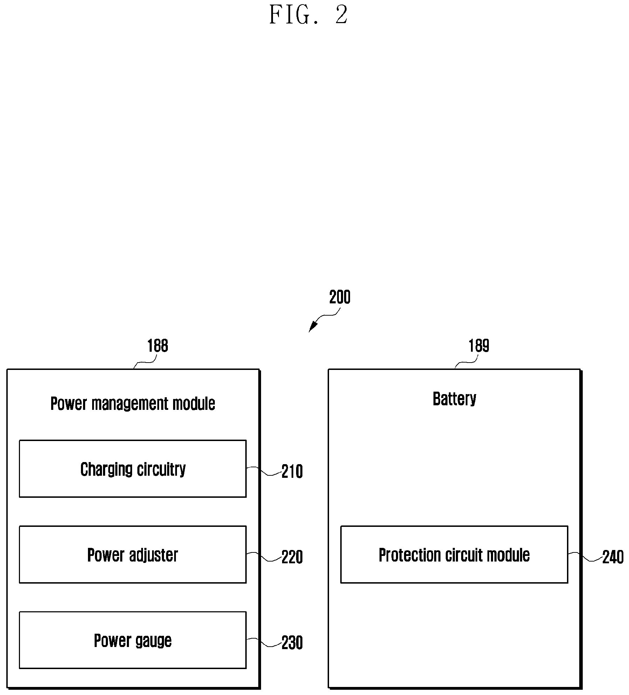

Fig. 2 is a block diagram 200 illustrating the power management module 188 and the battery 189 according to various exemplary embodiments.

Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an exemplary embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an exemplary embodiment, the power adjuster 220 may be implemented in the form of a low drop out (LDO) regulator or a switching regulator.

The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an exemplary embodiment, at least some of the functions of the power management module 188 may be performed by an external control device (e.g., the processor 120).

The battery 189, according to an exemplary embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an exemplary embodiment, at least part of the charging state information or use state information regarding the battery 189 may be measured using a corresponding sensor (e.g., a temperature sensor) of the sensor module 176, the power gauge 230, or the power management module 188.. According to an exemplary embodiment, the corresponding sensor (e.g., a temperature sensor) of the sensor module 176 may be included as part of the PCM 240, or may be disposed near the battery 189 as a separate device.

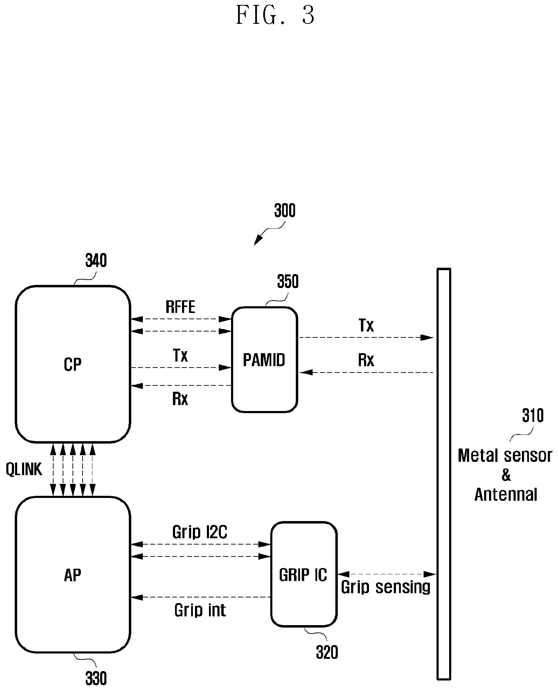

FIG. 3 is a block diagram illustrating communications among an application processor, a communication processor, and a grip sensor according to various exemplary embodiments.

With reference to FIG. 3, an electronic device 300 may include an application processor 330, a communication processor 340, a grip sensor 320, and a PAMiD module 350. The application processor 330 may perform driving of an application program of the electronic device 300 and graphic processing. The application processor 330 may be implemented in a system on chip (SoC) method that can perform various functions, such as a graphic processing unit (GPU), a communication chip, a sensor, a display, and multimedia. The communication processor 340 may perform data communication between the electronic device 300 and an external device, and may be integrally implemented with the application processor 330.

The grip sensor 320 may sense a physical contact between a user's body and the electronic device 300. For example, the grip sensor 320 may include a metal pad, and may be configured to sense a contact between the human body and the metal pad or a physical contact by using an amount of capacitance change. For example, if the amount of capacitance change in a metal sensor 310 satisfies a predetermined condition, the grip sensor 320 may generate a grip signal. For example, if the amount of capacitance change in the metal sensor 310 is larger than a threshold value, the grip sensor 320 may generate the grip signal. For example, the grip sensor 320 may transfer the generated grip signal to the application processor 330 through a grip interrupt channel. After being booted, the electronic device 300 may continuously perform monitoring of the amount of capacitance change of the metal sensor 310. The grip sensor 320 may be connected to the application processor 330 by using the grip interrupt that is a communication channel with the application processor 330. According to an exemplary embodiment, the grip sensor 320 may obtain the grip signal through sensing of the contact between the electronic device 300 and the human body, and may transmit the obtained grip signal to the application processor 330 through the grip interrupt channel. The grip interrupt channel may not be connected depending on the condition. For example, the application processor 330 may not receive the grip signal from the grip interrupt channel in a section in which a power back-off is not necessary. The PAMiD module 350 is a component of the electronic device 300 including an RF filter, and may include a duplexer, a switch, and a power amplifier.

According to various exemplary embodiments, the application processor 330 may be connected to the grip sensor 320 on a Grip I2C channel. According to an exemplary embodiment, the application processor 330 may control the grip sensor 320 on the Grip I2C channel. For example, the application processor 330 may configure the grip sensor 320 so that the grip sensor 320 does not transmit the grip signal and/or may configure the grip sensor 320 so that the grip sensor 320 transmits the grip signal on the Grip I2C channel.

According to various exemplary embodiments, in case that a predetermined condition is satisfied, the application processor 330 may enter a sleep mode. The sleep mode may mean a mode in which the application processor 330 is deactivated to reduce power consumption. For example, the application processor 330 may identify whether a user input is sensed, and may enter the sleep mode in case that the user input is not sensed for a predetermined time. In case of receiving the grip signal from the grip sensor 320 in the sleep mode state, the application processor 330 may release the sleep mode state. Hereinafter, "wakeup" may be used as the same meaning as the release of the sleep mode. The application processor 330 may wake up to receive the grip signal from the grip sensor 320.

According the various exemplary embodiments, the application processor 330 may transmit the grip signal to the communication processor 340. The application processor 330 may transmit the grip signal to the communication processor 340 by using a QLINK channel. The QLINK channel may mean a channel that is used for communication between the application processor 330 and the communication processor 340. The application processor 330 determines whether to execute a power back-off of the communication processor 340 by using the received grip signal. The communication processor 340 controls a transmission power based on whether to execute the power back-off.

A method in which the electronic device improves the current consumption will be briefly described as follows. After entering the sleep mode, the electronic device determines whether to execute the power back-off. If it is determined not to execute the power back-off, the electronic device may block the grip signal that is input from the grip sensor to the application processor, and maintains the sleep mode. Thereafter, if it is determined to execute the power back-off, the electronic device makes the application processor wake up, and may transfer the grip signal from the grip sensor to the application processor.

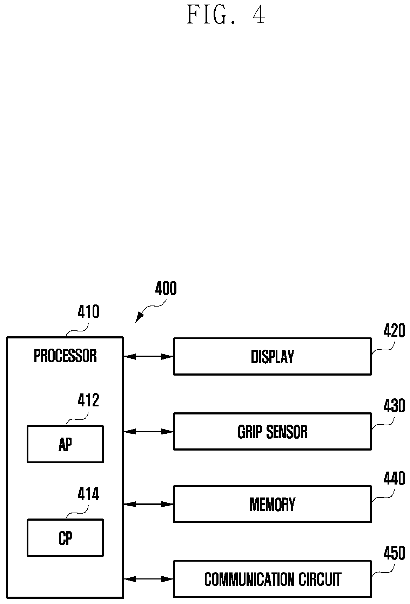

FIG. 4 is a block diagram of an electronic device according to various exemplary embodiments.

With reference to FIG. 4, an electronic device 400 may include a display 420, a grip sensor 430, an application processor 412, a communication processor 414, a memory 440, and a communication circuit 450, and in various exemplary embodiments, some of the illustrated constitutions may be omitted or replaced. The electronic device 400 may further include at least some of the constitutions and/or functions of the electronic device 101 of FIG. 1. At least some of the illustrated (or non-illustrated) constitutions of the electronic device 400 may be connected to each other operatively, functionally, and/or electrically.

According to various exemplary embodiments, the display 420 may display various images under the control of a processor 410. The display 420 may be implemented by any one of a liquid crystal display (LCD), a light-emitting diode (LED) display, a micro LED display, a quantum dot (QD) display, or an organic light-emitting diode (OLED) display, but is not limited thereto. The display 420 may be formed by a touch screen that senses an input of a touch using a part (e.g., finger) of a user's body or an input device (e.g., stylus pen) and/or a proximity touch (or hovering). The display 420 may include at least some of the constitutions and/or functions of the display module 160 of FIG. 1. The display 420 may include a metal sensor, and the metal sensor may measure capacitance that is changed in response to a user's input against the display 420.

According to various exemplary embodiments, the display 420 may be flexible at least partly, and may be implemented by a foldable display or a rollable display.

According to various exemplary embodiments, the grip sensor 430 may sense a physical contact of the user's body with the electronic device 400. For example, the grip sensor 430 may sense an operation of the user gripping the electronic device 400. According to an exemplary embodiment, the grip sensor 430 may monitor an amount of capacitance change of the metal sensor included in the display 420, and may identify whether the amount of capacitance change of the metal sensor gets out of a predetermined range. If the amount of capacitance change of the metal sensor gets out of the predetermined range, the grip sensor 430 may generate the grip signal, and may transmit the generated grip signal to the application processor 412 by using a Grip interrupt channel.

According to various exemplary embodiments, the memory 440 may include a volatile memory (e.g., volatile memory 132 of FIG. 1) and a nonvolatile memory (e.g., nonvolatile memory 134 of FIG. 1), and may store various pieces of data temporarily or permanently. The memory 440 may include at least some of the constitutions and/or functions of the memory 130 of FIG. 1, and may store the program 140 of FIG. 1 therein. According to various exemplary embodiments, the memory 440 may store therein various instructions that can be performed by the processor 410. Such instructions may include control commands, such as arithmetic and logical operations that can be recognized by the processor 410, data movement, and input/output.

According to various exemplary embodiments, the communication circuit 450 may receive and/or transmit various pieces of information from/to the electronic device 400 and/or an external device by communicating with the electronic device 400 and/or the external device. The communication processor 514 may be connected to the communication circuit 450, and may process various pieces of information received by the communication circuit 450. Further, the communication processor 514 may control the communication circuit 450 to transmit the various pieces of information to the electronic device 400 and the external electronic device.

According to various exemplary embodiments, the application processor 412 may be connected to the constituent elements (e.g., the display 420, the grip sensor 430, and the memory 440) of the electronic device 400 operatively, functionally, and/or electrically, and may be configured to perform control of the constituent elements and/or an arithmetic operation or data processing related to the communication. The application processor 412 may include at least some of the constitutions and/or functions of the processor 120 of FIG. 1. Hereinafter, the "processor" means the application processor 412, and may be used separately from the communication processor 414.

According to various exemplary embodiments, the arithmetic operation and the data processing function, which the application processor 412 may implement on the electronic device 400, are not limited, and hereinafter, various exemplary embodiments to improve the current consumption by using the electronic device 400 will be described. The operations of the application processor 412 to be described later may be performed by loading the instructions stored in the memory 440.

According to various exemplary embodiments, the application processor 412 may determine whether to enter the sleep mode. For example, if there is no external input for a predetermined time, the application processor 412 may determine to enter the sleep mode. For example, if there is no user's touch input on the display 420 for the predetermined time, the application processor 412 may enter the sleep mode. The application processor 412 can reduce unnecessary power consumption by entering the sleep mode.

According to various exemplary embodiments, the application processor 412 may receive the grip signal from the grip sensor 430. The grip sensor 430 may monitor the amount of capacitance change of the metal sensor, and if the amount of the capacitance change satisfies the predetermined condition, the grip sensor 430 may transmit the grip signal to the application processor 412. For example, if the amount of capacitance change of the metal sensor exceeds a threshold value, the grip sensor 430 may transmit the grip signal to the application processor 412. If the grip signal is received, the application processor 412 may transmit the grip signal to the communication processor 414. According to an exemplary embodiment, if the grip signal is received in the sleep mode, the application processor 412 may release (wake up from) the sleep mode, and may transmit the grip signal to the communication processor 414.

According to various exemplary embodiments, in case of receiving the grip signal, the communication processor 414 determines whether to execute a power back-off. For example, the communication processor 414 may calculate a specific absorption rate (SAR) in accordance with the grip signal. The specific absorption rate is a quantitative expression of an amount of electromagnetic waves that are absorbed into a human body or an animal body, and different upper limit values may be set for each country. For example, the specific absorption rate may be 1.6 W/kg in Korea, whereas according to International Recommendation Standard, the specific absorption rate may be 2 W/kg. The specific absorption rate may be in proportion to a transmission power, and if the specific absorption rate is higher than a predetermined value, the communication processor 414 may lower the transmission power by executing the power back-off. For example, the maximum power that can be transmitted by the electronic device 400 is 23 dB, and in case that the maximum power is used, the specific absorption rate may exceed the threshold value. Accordingly, if the communication processor 414 performs transmission with the transmission power of 19 dB by executing the power back-off, the specific absorption rate may be controlled not to exceed the threshold value.

According to various exemplary embodiments, if the predetermined condition is satisfied, the application processor 412 may not receive the grip signal from the grip sensor 430. For example, if the predetermined condition is satisfied, the application processor 412 may block the Grip interrupt channel that is an interrupt signal line of the grip sensor 430. For example, if the predetermined condition is satisfied, the application processor 412 may configure the grip sensor 430 on the Grip I2C channel so that the grip sensor 430 does not transmit the grip signal on the Grip interrupt channel. According to another embodiment, the application processor 412 disregards the grip signal that is received on the Grip interrupt channel. According to another embodiment, if the predetermined condition is satisfied, the application processor 412 may deactivate the grip sensor 430. Hereinafter, an exemplary embodiment in which the application processor 412 blocks the communication channel with the grip sensor 430 will be described in detail.

According to an exemplary embodiment, in case of using the band to which the power back-off is not applied, the application processor 412 may block the communication channel with the grip sensor 430. The application processor 412 may use a plurality of bands having different frequencies for communication connection with a base station. For example, in 2G communication (global system for mobile communications (GSM)), the power back-off may be applied to only two of total four bands, and in 3G communication (wideband code division multiple access (WCDMA)), the power back-off may be applied to only three of total five bands. In 4G communication (long term evolution (LTE)), the power back-off may be applied to only 8 of total 26 bands, and in 5G communication (SUB6), the power back-off may be applied to only 7 of total 18 bands. The application processor 412 may identify whether the band that is currently used for the communication is the band to which the power back-off is applied, and in case of the band to which the power back-off is not applied, the application processor 412 may block the communication channel with the grip sensor 430.

According to an exemplary embodiment, the application processor 412 may block the communication channel with the grip sensor 430 based on an electric field condition of an area in which the electronic device 400 is currently located. In case of an area of a strong electric field having a good electric field condition, the communication connection may be smoothly performed even if the electronic device 400 does not use a high transmission power. In case of such an area of a strong electric field, the application processor 412 may use a low transmission power enough that the power back-off is not needed to be performed. The application processor 412 may lower the transmission power based on that the current location is identified as the area of the strong electric field, and may not execute the power back-off. The application processor 412 may identify whether the area in which the electronic device 400 is currently located is the area of the strong electric field, and if the current area is identified as the area of the strong electric field, the application processor 412 may block the communication connection with the grip sensor 430. In contrast, in case of an area of a weak electric field having weak reception sensitivity, it is required to use a high transmission power in order to smoothly perform the communication connection. Accordingly, in order to determine whether to execute the power back-off for reducing the transmission power in the area of the weak electric field, the communication channel with the grip sensor 430 may not be blocked.

According to an exemplary embodiment, the application processor 412 may block the communication channel with the grip sensor 430 when the electronic device 400 is in a C-DRX section. In case that the electronic device 400 satisfies the predetermined condition, the application processor 412 may enter the C-DRX section, and may block the RF of a UE. For example, in case that the electronic device 400 does not sense data traffics for a predetermined time, the application processor 412 may enter the C-DRX section. In the C-DRX section, the application processor 412 may intermittently perform network searching only, and may not perform data connection between the network and the UE. Since there is not the power that is used by the electronic device 400, the transmission power does not cause a problem, and thus the power back-off function may not be performed. The application processor 412 may improve the current consumption by blocking the communication channel with the grip sensor 430.

According to an exemplary embodiment, the application processor 412 may block the communication channel with the grip sensor 430 in a downlink section in a time division duplex (TDD) band. The TDD band may mean a frequency usage method in which time is divided and an uplink and a downlink are used in turn. According to an exemplary embodiment, the TDD band may be time-divided, and the frequency may be used as the uplink, the downlink, and a special subframe. For example, the application processor 412 may perform the data communication for a predetermined time (e.g., 10 ms) in one frame. One frame may be composed of a plurality of subframes, and each subframe may include at least an uplink, a downlink, and a special subframe. The uplink may be a section in which the power is transmitted, the downlink may be a section in which the power is received, and the special subframe may be a section in which the sync is adjusted. In the uplink, the power is transmitted, and thus the specific absorption rate should be considered. However, in the downlink and the special subframe, the power is received or only a micro power is transmitted, and thus it is not necessary to consider the specific absorption rate. Accordingly, in case of using the TDD band, the application processor 412 may not be required to execute the power back-off in the downlink section and the special subframe section excluding the uplink section in which the power is transmitted. In case of using the TDD band, the application processor 412 may block the communication channel with the grip sensor 430 in the downlink section and the special subframe section.

According to various exemplary embodiments, in case that at least one of the above-described conditions is satisfied, the application processor 412 may block the communication channel with the grip sensor 430. According to another embodiment, in case that all of the above-described conditions are not satisfied, the application processor 412 may resume the communication with the grip sensor 430. In case of receiving the grip signal from the grip sensor 430, the application processor 412 may wake up and may transfer the grip signal to the communication processor 414.

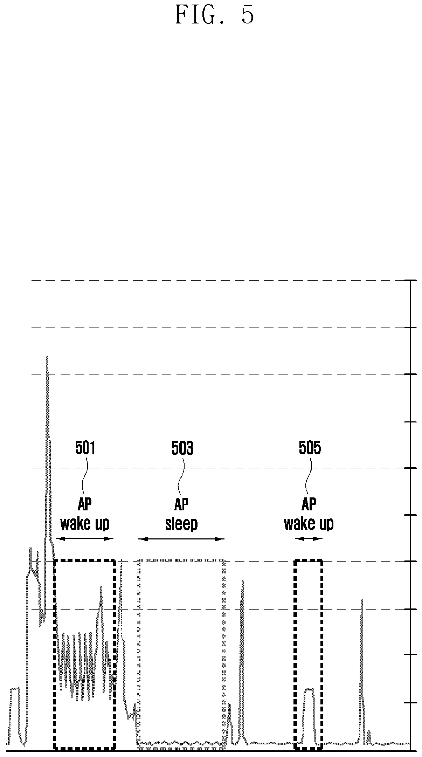

FIG. 5 is a graph illustrating current consumption of an electronic device in accordance with a sleep mode and a wakeup of an application processor according to various exemplary embodiments.

According to various exemplary embodiments, the electronic device may perform different functions depending on a sleep mode 503 and wakeup 501 and 505 of the processor (e.g., application processor 412 of FIG. 4), and a difference in power consumption may occur depending on the function performed by the electronic device. The application processor 412 may perform only the minimum function in the sleep mode. For example, the power consumption and battery consumption may be reduced by reducing the brightness and resolution of the display, and the speed of the CPU.

With reference to the graph of FIG. 5, there may be a big difference between the current consumed by the application processor 412 in the wakeup state 501 and 505 and the current consumed by the application processor 412 in the sleep mode 503. When the electronic device is in the wakeup state, large current may be consumed to perform various functions, and when the electronic device enters the sleep mode 503, the current consumption may be reduced. Thereafter, if the electronic device is switched to the wakeup state 505 again, the current consumption may be increased again.

According to various exemplary embodiments, in order to reduce the current consumption in the wakeup state, the application processor 412 may configure a condition where the wakeup is not necessary, and if the condition where the wakeup is not necessary is satisfied, the application processor 412 may block the communication channel with the grip sensor in order not to receive the grip signal from the grip sensor (e.g., grip sensor 430 of FIG. 4).

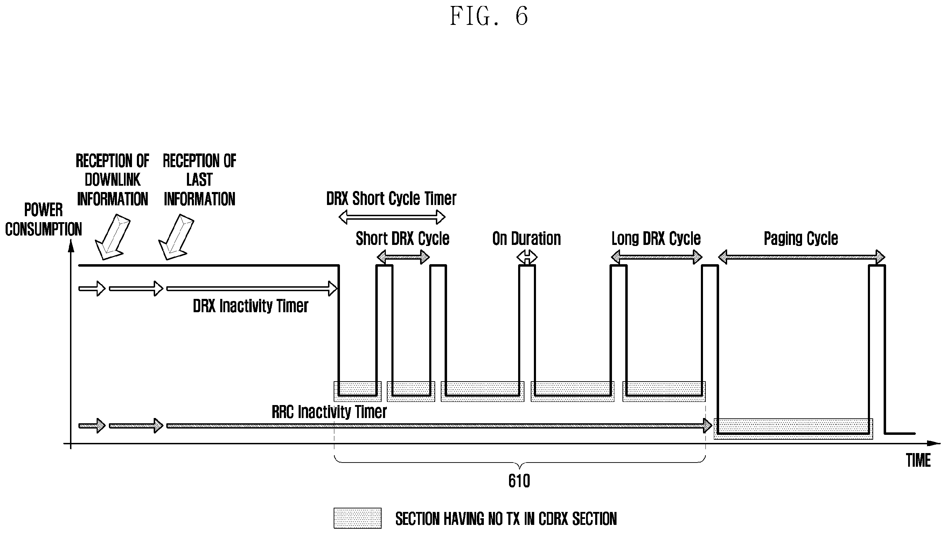

FIG. 6 is a diagram illustrating power consumption of an electronic device in a C-DRX section according to various exemplary embodiments.

According to various exemplary embodiments, the electronic device may block the communication channel with the grip sensor (e.g., grip sensor 430 of FIG. 4) in a section in which the power is not transmitted in a connected-DRX (C-DRX) section 610. In the C-DRX section 610, the electronic device may not transmit the power excluding the time when performing network searching. If the electronic device does not transmit the power, the specific absorption rate does not cause a problem, and thus the power back-off may not be performed. In case that the power is not transmitted in the C-DRX section 610, the electronic device may block the communication channel with the grip sensor 430.

For example, with reference to FIG. 6, if a discontinuous reception (DRX) deactivation time elapses after reception of downlink information is completed, the electronic device may enter the C-DRX section 610. In the C-DRX section 610, the electronic device is switched from a state where the electronic device continuously receives data to a state where the electronic device discontinuously receives the data, and thus the power consumption in the cutoff section may be reduced.

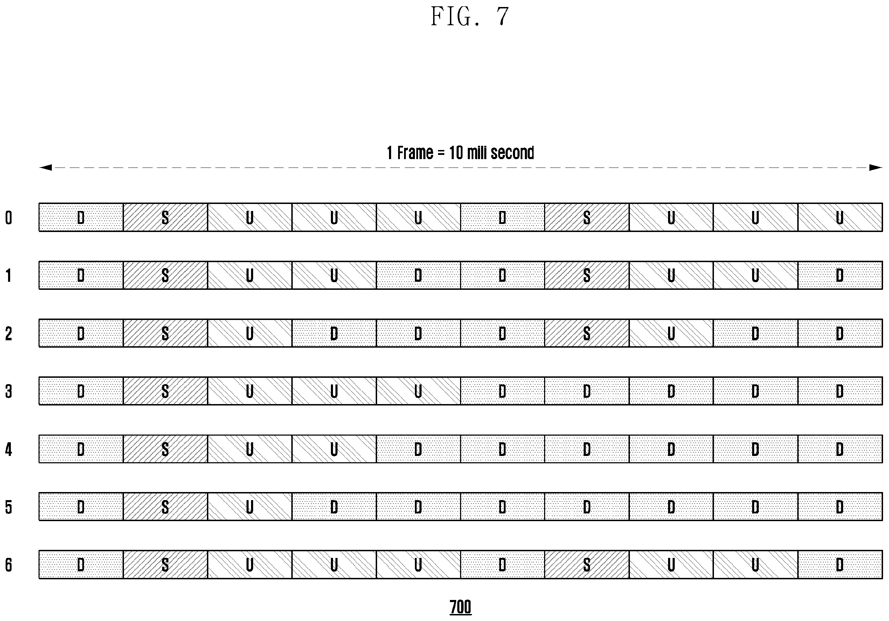

FIG. 7 is a diagram illustrating an operating section in accordance with a data communication method in a TDD band according to various exemplary embodiments.

According to various exemplary embodiments, in case of performing data communication in a TDD band, the electronic device may block the communication channel with the grip sensor (e.g., grip sensor 430 of FIG. 4) on a downlink frequency channel. The TDD band may mean the frequency usage method in which time is divided and an uplink and a downlink are used in turn. According to an exemplary embodiment, the TDD band may be time-divided, and the frequency may be used as the uplink, the downlink, and the special subframe. For example, the processor (e.g., application processor 412 of FIG. 4) may perform the data communication for a predetermined time (e.g., 10 ms) in one frame. One frame may be composed of a plurality of subframes, and each subframe may include at least an uplink, a downlink, and a special subframe. The uplink may be a section in which the power is transmitted, the downlink may be a section in which the power is received, and the special subframe may be a section in which the sync is adjusted. In the uplink, the power is transmitted, and thus the specific absorption rate should be considered. However, in the downlink and the special subframe, the power is received or only a micro power is transmitted, and thus it is not necessary to consider the specific absorption rate. Accordingly, in case of using the TDD band, the application processor 412 may not be required to execute the power back-off in the downlink section and the special subframe section excluding the uplink section in which the power is transmitted. In case of using the TDD band, the application processor 412 may block the communication channel with the grip sensor 430 in the downlink section and the special subframe section.

With reference to FIG. 7, the electronic device may use 7 kinds of TDD band communication methods 700. For example, in the 0-th method, the electronic device may use the frequency channel in the order of downlink, special subframe, uplink, uplink, uplink, downlink, special subframe, uplink, uplink, and uplink. Since the electronic device transmits the power in the uplink, it may not transmit the power in the first, second, sixth, and seventh subframes. In the first, second, sixth, and seventh subframes, the electronic device may block the communication channel between the application processor 412 and the grip sensor 430, and may not execute the power back-off.

An electronic device according to various exemplary embodiments may include: a grip sensor configured to sense a grip signal; a communication processor (CP); and an application processor (AP) operatively connected to the grip sensor and the communication processor, wherein the application processor is configured to: enter a sleep mode, determine whether the grip sensor generates the grip signal, release the sleep mode based on reception of the generated grip signal from the grip sensor in response to the determination to generate the grip signal, notify the communication processor of the reception of the grip signal from the grip sensor, and control the communication processor to execute a power back-off.

In the electronic device according to various exemplary embodiments, the application processor may be configured to: determine not to generate the grip signal in case that a predetermined condition is satisfied, and block a communication channel with the grip sensor in response to the determination not to generate the grip signal.

In the electronic device according to various exemplary embodiments, the application processor may be configured to: identify whether a band in use is a band to which the power back-off is not applied, and determine not to receive the grip signal in response to the identification of the band as a band to which the power back-off is not applied.

In the electronic device according to various exemplary embodiments, the application processor may be configured to: identify whether an area of a current location is an area of a strong electric field by using the communication processor, and determine not to receive the grip signal in response to the identification of the area of the current location as the area of the strong electric field.

In the electronic device according to various exemplary embodiments, the application processor may be configured to: identify whether the electronic device is in a C-DRX section, and determine not to receive the grip signal in response to the identification of the electronic device in the C-DRX section.

In the electronic device according to various exemplary embodiments, the application processor may be configured to: identify whether a band that is used by the communication processor is a TDD band, and determine not to receive the grip signal in a downlink section in response to the identification of the band that is used by the communication processor as the TDD band.

In the electronic device according to various exemplary embodiments, the application processor may be configured to release the sleep mode in response to the generation of the grip signal in case that the predetermined condition is not satisfied.

In the electronic device according to various exemplary embodiments, the application processor may be configured to enter the sleep mode in case that a time when a user input is not sensed satisfies a predetermined condition.

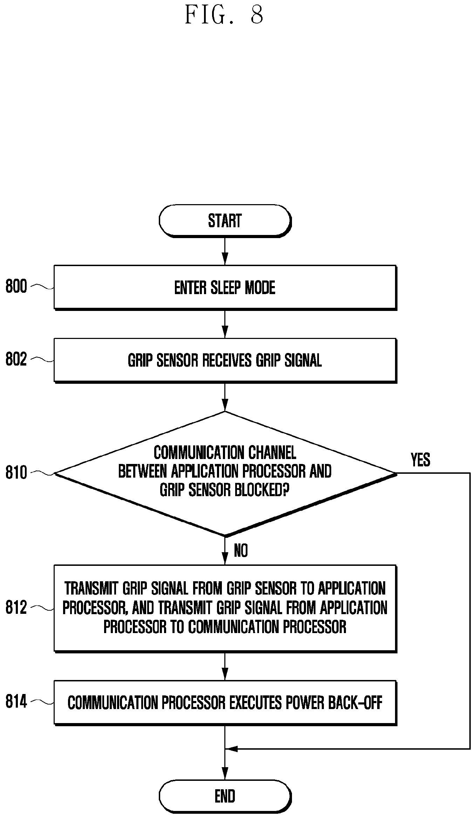

FIG. 8 is a flowchart of a method for improving current consumption of an electronic device according to various exemplary embodiments.

The method illustrated in FIG. 8 may be performed by the electronic devices (e.g., electronic device 101 of FIG. 1 and electronic device 400 of FIG. 4) described above through FIGS. 1 to 7, and hereinafter, description of the above-described technical features will be omitted. Further, respective operations in FIG. 8 are not absolutely essential, and some operations may be omitted.

According to various exemplary embodiments, at operation 800, the electronic device may enter the sleep mode. For example, if there is not an external input for a predetermined time, the electronic device may determine that the application processor (e.g., application processor 412 of FIG. 4) will enter the sleep mode. For example, if there is not a user's touch input on the display for a predetermined time, the application processor 412 may enter the sleep mode. The application processor 412 can reduce unnecessary power consumption by entering the sleep mode.

According to various exemplary embodiments, at operation 802, the electronic device may receive the grip signal by using the grip sensor 430. The grip sensor 430 may monitor an amount of capacitance change of a metal sensor, and if the amount of capacitance change satisfies a predetermined condition, the grip sensor 430 may transmit the grip signal to the application processor 412. For example, if the amount of capacitance change of the metal sensor exceeds a threshold value, the grip sensor 430 may transmit the grip signal to the application processor 412. If the grip signal is received, the application processor 412 may transmit the grip signal to the communication processor (e.g., communication processor 414 of FIG. 4). According to an exemplary embodiment, if the grip signal is received in the sleep mode, the electronic device may release (wake up from) the sleep mode, and may transmit the grip signal to the communication processor 414.

According to various exemplary embodiments, in case of receiving the grip signal, the communication processor 414 may determine whether to execute the power back-off. For example, the communication processor 414 may calculate a specific absorption rate (SAR) in accordance with the grip signal. The specific absorption rate is a quantitative expression of an amount of electromagnetic waves that are absorbed into a human body or an animal body, and different upper limit values may be set for each country.

According to various exemplary embodiments, at operation 810, the electronic device may determine whether to block a communication channel between the application processor 412 and the grip sensor 430. If it is determined to block the communication channel between the application processor 412 and the grip sensor 430, the electronic device may not execute the power back-off.

According to an exemplary embodiment, in case of using a band to which the power back-off is not applied, the electronic device may block the communication channel with the grip sensor 430. The electronic device may use a plurality of bands having different frequencies for communication connection with a base station. For example, in 2G communication (global system for mobile communications (GSM)), the power back-off may be applied to only two of total four bands, and in 3G communication (wideband code division multiple access (WCDMA)), the power back-off may be applied to only three of total five bands. In 4G communication (long term evolution (LTE)), the power back-off may be applied to only 8 of total 26 bands, and in 5G communication (SUB6), the power back-off may be applied to only 7 of total 18 bands. The electronic device may identify whether the band that is currently used for the communication is the band to which the power back-off is applied, and in case of the band to which the power back-off is not applied, the electronic device may block the communication channel with the grip sensor 430.

According to an exemplary embodiment, the electronic device may block the communication channel with the grip sensor 430 based on an electric field condition of an area in which the electronic device is currently located. In case of an area of a strong electric field having a good electric field condition, the communication connection may be smoothly performed even if the electronic device does not use a high transmission power. In case of such an area of a strong electric field, the electronic device may use a low transmission power enough that the power back-off is not needed to be performed. The electronic device may lower the transmission power based on that the current location is identified as the area of the strong electric field, and may not execute the power back-off. The electronic device may identify whether the area in which the electronic device is currently located is the area of the strong electric field, and if the current area is identified as the area of the strong electric field, the electronic device may block the communication connection with the grip sensor 430. In contrast, in case of an area of a weak electric field having weak reception sensitivity, it is required to use a high transmission power in order to smoothly perform the communication connection. Accordingly, in order to determine whether to execute the power back-off for reducing the transmission power in the area of the weak electric field, the communication channel with the grip sensor 430 may not be blocked.

According to an exemplary embodiment, the electronic device may block the communication channel with the grip sensor 430 when the electronic device is in a C-DRX section. In case that the electronic device satisfies the predetermined condition, the electronic device may enter the C-DRX section, and may block the RF of a UE. For example, in case that the electronic device does not sense data traffics for a predetermined time, the electronic device may enter the C-DRX section. In the C-DRX section, the electronic device may intermittently perform network searching only, and may not perform data connection between the network and the UE. Since there is not the power that is used by the electronic device, the transmission power does not cause a problem, and thus the power back-off function may not be performed. The electronic device may improve the current consumption by blocking the communication channel with the grip sensor 430.

According to an exemplary embodiment, the electronic device may block the communication channel with the grip sensor 430 in a downlink section in a time division duplex (TDD) band. The TDD band may mean a frequency usage method in which time is divided and an uplink and a downlink are used in turn. According to an exemplary embodiment, the TDD band may be time-divided, and the frequency may be used as the uplink, the downlink, and a special subframe. For example, the electronic device may perform the data communication for a predetermined time (e.g., 10 ms) in one frame. One frame may be composed of a plurality of subframes, and each subframe may include at least an uplink, a downlink, and a special subframe. The uplink may be a section in which the power is transmitted, the downlink may be a section in which the power is received, and the special subframe may be a section in which the sync is adjusted. In the uplink, the power is transmitted, and thus the specific absorption rate should be considered. However, in the downlink and the special subframe, the power is received or only a micro power is transmitted, and thus it is not necessary to consider the specific absorption rate. Accordingly, in case of using the TDD band, the electronic device may not be required to execute the power back-off in the downlink section and the special subframe section excluding the uplink section in which the power is transmitted. In case of using the TDD band, the electronic device may block the communication channel with the grip sensor 430 in the downlink section and the special subframe section.

According to various exemplary embodiments, at operation 812, when it is determined not to block the communication channel between the application processor 412 and the grip sensor 430, the electronic device may transmit the grip signal from the grip sensor 430 to the application processor 412, and may transmit the grip signal from the application processor 412 to the communication processor(e.g., the communication processor 414 of FIG. 4 ). At operation 814, the electronic device may perform the power back-off using the communications processor 414.

According to various exemplary embodiments, in case that at least one of the above-described conditions is satisfied, the electronic device may block the communication channel with the grip sensor 430. According to another embodiment, in case that all of the above-described conditions are not satisfied, the electronic device may resume the communication with the grip sensor 430. In case of receiving the grip signal from the grip sensor 430, the electronic device may wake up and may transfer the grip signal to the communication processor 414.

According to another embodiment, the application processor 412 may determine whether to block the communication channel before entering the sleep mode. For example, the application processor 412 may enter the sleep mode after the grip sensor 430 is configured not to transmit the grip signal on the Grip I2C channel. If all of the above-described conditions are not satisfied after entering the sleep mode, the communication processor 414 may request the application processor 412 to resume the communication with the grip sensor 430. For example, the application processor 412 may receive a communication resume request from the communication processor 414, and may configure the grip sensor 430 so that the grip sensor 430 transmits the grip signal on the Grip I2C channel.

The exemplary embodiments of the disclosure disclosed in the specification and the drawings merely present specific examples to easily explain the technical contents of the disclosure and to help understanding of the disclosure, and are not intended to limit the scope of the disclosure. In addition to the exemplary embodiments disclosed herein, it is apparent to those of ordinary skill in the art to which the disclosure pertains that other modified examples based on the technical idea of the disclosure can be embodied.

## Claims

1. An electronic device (100, 200, 300, 400) comprising:
a grip sensor (330, 430) configured to generate a grip signal;
a communication processor, CP, (340, 414); and
an application processor, AP, (330, 412) operatively connected to the grip sensor and the communication processor,
a memory storing instructions that, when the instructions are executed on the application processor, cause the electronic device to:
determine whether to execute a power back-off of the communication processor (340, 430) for reducing a transmission power,
when it is determined to execute the power back-off:
release a sleep mode of the application processor,
transmit the grip signal from the grip sensor to communication processor through the application processor;
control the communication processor to execute the power back-off based on the grip signal, and
when it is determined not to execute the power back-off:
determine,based on a predetermined condition being satisfied, to disregard the grip signal generated by the grip sensor, and
maintain the sleep mode of the application processor.

2. The electronic device (100, 200, 300, 400) according to claim 1, wherein the instructions, when instructions are executed on the application processor, cause the electronic device to
identify whether a band in use is a band to which the power back-off is not applied, and determine to disregard the grip signal generated by the grip sensor in response to the identification of the band as a band to which the power back-off is not applied.

3. The electronic device (100, 200, 300, 400) according to any one of the previous claims, wherein the instructions, when the instructions are executed on the application processor, cause the electronic device to
identify whether an area of a current location is an area of a strong electric field by using the communication processor, and
determine to disregard the grip signal generated by the grip sensor in response to the identification of the area of the current location as the area of the strong electric field.

4. The electronic device (100, 200, 300, 400) according to any one of the previous claims, wherein the instructions, when the instructions are executed on the application processor, cause the electronic device to
identify whether the electronic device is in a C-DRX section, and
determine to disregard the grip signal generated by the grip sensor in response to the identification of the electronic device in the C-DRX section.

5. The electronic device (100, 200, 300, 400) according to any one of the previous claims, wherein the instructions, when the instructions are executed on the application processor, cause the electronic device to
identify whether a band that is used by the communication processor is a TDD band, and determine to disregard the grip signal generated by the grip sensor in a downlink section in response to the identification of the band that is used by the communication processor as the TDD band.

6. The electronic device (100, 200, 300, 400) according to any one of the previous claims, wherein the instructions, when the instructions are executed on the application processor, cause the electronic device to release the sleep mode in response to the generation of the grip signal in case that the predetermined condition is not satisfied.

7. The electronic device (100, 200, 300, 400) according to any one of the previous claims, wherein the instructions, when the instructions are executed on the application processor, cause the electronic device to enter the sleep mode in case that a time when a user input is not sensed satisfies a predetermined condition.

8. A method for improving current consumption of an electronic device (100, 200, 300, 400), the method comprising:
determining whether to execute a power back-off of the communication processor (340, 430) for reducing a transmission power;
when it is determined to execute the power back-off;
releasing a sleep mode of the application processor;
transmitting the grip signal from the grip sensor to communication processor through the application processor;
controlling the communication processor to execute the power back-off by reducing a transmission power based on the grip signal, and
when it is determined not to execute the power back-off:
determining,based on a predetermined condition being satisfied, to disregard the grip signal generated by the grip sensor, and
maintaining the sleep mode of the application processor.

9. The method according to claim 8, wherein the determining to disregard the grip signal comprises:
identifying whether a band in use is a band to which the power back-off is not applied; and
determining to disregard the grip signal generated by the grip sensor in response to the identification of the band as a band to which the power back-off is not applied.

10. The method according to any one of the previous claims 8-9, wherein the determining to disregard the grip signal comprises:
identifying whether an area of a current location is an area of a strong electric field by using the communication processor; and
determining to disregard the grip signal generated by the grip sensor in response to the identification of the area of the current location as the area of the strong electric field.

11. The method according to any one of the previous claims 8-10, wherein the determining to disregard the grip signal comprises :
identifying whether the electronic device is in a C-DRX section; and
determining to disregard the grip signal generated by the grip sensor in response to the identification of the electronic device in the C-DRX section.

12. The method according to any one of the previous claims 8-11, wherein the determining to disregard the grip signal comprises:
identifying whether a band that is used by the communication processor is a TDD band; and
determining to disregard the grip signal generated by the grip sensor in a downlink section in response to the identification of the band that is used by the communication processor as the TDD band; and/or
releasing the sleep mode in response to the generation of the grip signal in case that the predetermined condition is not satisfied.

13. The method according to any one of the previous claims 8-12, wherein entering the sleep mode comprises:
entering the sleep mode in case that a time when a user input is not sensed satisfies a predetermined condition.

## Patentansprüche

1. Elektronische Vorrichtung (100, 200, 300, 400) die Folgendes umfasst:
einen Griffsensor (330, 430), der dazu konfiguriert ist, ein Griffsignal zu erzeugen;
einen Kommunikationsprozessor (CP, Communication Processor) (340, 414);
einen Anwendungsprozessor (AP, Application Processor) (330, 412), der funktionsmäßig mit dem Griffsensor und dem Kommunikationsprozessor verbunden ist; und
einen Speicher, in dem Anweisungen gespeichert sind, die, wenn sie auf dem Anwendungsprozessor ausgeführt werden, die elektronische Vorrichtung zu Folgendem veranlassen:
Bestimmen, ob eine Leistungsreduzierung des Kommunikationsprozessors (340, 430) zur Verringerung der Sendeleistung ausgeführt werden soll,
wenn bestimmt wird, dass die Leistungsreduzierung ausgeführt werden soll:
Freigeben eines Ruhemodus des Anwendungsprozessors,
Übertragen des Griffsignals von dem Griffsensor über den Anwendungsprozessor an den Kommunikationsprozessor;
Steuern des Kommunikationsprozessors, um die Leistungsreduzierung auf der Grundlage des Griffsignals auszuführen, und
wenn bestimmt wird, dass die Leistungsreduzierung nicht ausgeführt werden soll:
Bestimmen, auf der Grundlage, dass eine vorbestimmte Bedingung erfüllt ist, das von dem Griffsensor erzeugte Griffsignal zu ignorieren, und
Aufrechterhalten des Ruhemodus des Anwendungsprozessors.

2. Elektronische Vorrichtung (100, 200, 300, 400) nach Anspruch 1, wobei die Anweisungen, wenn sie auf dem Anwendungsprozessor ausgeführt werden, die elektronische Vorrichtung zu Folgendem veranlassen:
Identifizieren, ob es sich bei einem verwendeten Band um ein Band handelt, auf das die Leistungsreduzierung nicht angewendet wird, und
Bestimmen, das n de Griffsensor erzeugte Griffsignal zu ignorieren als Reaktion auf die Identifizierung, dass es sich bei dem Band um ein Band handelt, auf das die Leistungsreduzierung nicht angewendet wird.

3. Elektronische Vorrichtung (100, 200, 300, 400) nach einem der vorhergehenden Ansprüche, wobei die Anweisungen, wenn sie auf dem Anwendungsprozessor ausgeführt werden, die elektronische Vorrichtung zu Folgendem veranlassen:
Identifizieren, ob es sich bei einem Bereich des aktuellen Standorts um einen Bereich mit starkem elektrischen Feld handelt, unter Verwendung des Kommunikationsprozessors, und
Bestimmen, das von dem Griffsensor erzeugte Griffsignal zu ignorieren, als Reaktion auf die Identifizierung des Bereichs des aktuellen Standorts als den Bereich mit starkem elektrischen Feld.

4. Elektronische Vorrichtung (100, 200, 300, 400) nach einem der vorhergehenden Ansprüche, wobei die Anweisungen, wenn sie auf dem Anwendungsprozessor ausgeführt werden, die elektronische Vorrichtung zu Folgendem veranlassen:
Identifizieren, ob sich die elektronische Vorrichtung in einem C-DRX-Teilbereich befindet, und
Bestimmen, das von dem Griffsensor erzeugte Griffsignal zu ignorieren, als Reaktion auf die Identifizierung, dass sich die elektronische Vorrichtung im C-DRX-Teilbereich befindet.

5. Elektronische Vorrichtung (100, 200, 300, 400) nach einem der vorhergehenden Ansprüche, wobei die Anweisungen, wenn sie auf dem Anwendungsprozessor ausgeführt werden, die elektronische Vorrichtung zu Folgendem veranlassen:
Identifizieren, ob es sich bei einem von dem Kommunikationsprozessor verwendeten Band um ein TDD-Band handelt, und
Bestimmen, das von dem Griffsensor in einem Downlink-Teilbereich erzeugte Griffsignal zu ignorieren, als Reaktion auf die Identifizierung, dass es sich bei dem von dem Kommunikationsprozessor verwendeten Band um das TDD-Band handelt.

6. Elektronische Vorrichtung (100, 200, 300, 400) nach einem der vorhergehenden Ansprüche, wobei die Anweisungen, wenn sie auf dem Anwendungsprozessor ausgeführt werden, die elektronische Vorrichtung zu Folgendem veranlassen: Freigeben des Ruhemodus als Reaktion auf die Erzeugung des Griffsignals, falls die vorbestimmte Bedingung nicht erfüllt ist.

7. Elektronische Vorrichtung (100, 200, 300, 400) nach einem der vorhergehenden Ansprüche, wobei die Anweisungen, wenn sie auf dem Anwendungsprozessor ausgeführt werden, die elektronische Vorrichtung zu Folgendem veranlassen: Eintreten in den Ruhemodus, falls ein Zeitraum, in dem keine Benutzereingabe erfasst wird, eine vorbestimmte Bedingung erfüllt.

8. Verfahren zur Verbesserung des Stromverbrauchs einer elektronischen Vorrichtung (100, 200, 300, 400), wobei das Verfahren Folgendes umfasst:
Bestimmen, ob eine Leistungsreduzierung des Kommunikationsprozessors (340, 430) zur Verringerung der Sendeleistung ausgeführt werden soll,
wenn bestimmt wird, dass die Leistungsreduzierung ausgeführt werden soll:
Freigeben eines Ruhemodus des Anwendungsprozessors;
Übertragen des Griffsignals von dem Griffsensor über den Anwendungsprozessor an den Kommunikationsprozessor;
Steuern des Kommunikationsprozessors, um die Leistungsreduzierung auf der Grundlage des Griffsignals auszuführen, und
wenn bestimmt wird, dass die Leistungsreduzierung nicht ausgeführt werden soll:
Bestimmen, das von dem Griffsensor erzeugte Griffsignal zu ignorieren auf der Grundlage, dass eine vorbestimmte Bedingung erfüllt ist, und
Aufrechterhalten des Ruhemodus des Anwendungsprozessors.

9. Verfahren nach Anspruch 8, wobei das Bestimmen, das Griffsignal zu ignorieren, Folgendes umfasst:
Identifizieren, ob es sich bei einem verwendeten Band um ein Band handelt, auf das die Leistungsreduzierung nicht angewendet wird, und
Bestimmen, das von dem Griffsensor erzeugte Griffsignal zu ignorieren als Reaktion auf die Identifizierung, dass es sich bei dem Band um ein Band handelt, auf das die Leistungsreduzierung nicht angewendet wird.

10. Verfahren nach einem der vorhergehenden Ansprüche 8 und 9, wobei das Bestimmen, das Griffsignal zu ignorieren, Folgendes umfasst:
Identifizieren, ob es sich bei einem Bereich des aktuellen Standorts um einen Bereich mit starkem elektrischen Feld handelt, unter Verwendung des Kommunikationsprozessors, und
Bestimmen, das von dem Griffsensor erzeugte Griffsignal zu ignorieren, als Reaktion auf die Identifizierung des Bereichs des aktuellen Standorts als den Bereich mit starkem elektrischen Feld.

11. Verfahren nach einem der vorhergehenden Ansprüche 8 bis 10, wobei das Bestimmen, das Griffsignal zu ignorieren, Folgendes umfasst:
Identifizieren, ob sich die elektronische Vorrichtung in einem C-DRX-Teilbereich befindet, und
Bestimmen, das von dem Griffsensor erzeugte Griffsignal zu ignorieren, als Reaktion auf die Identifizierung, dass sich die elektronische Vorrichtung im C-DRX-Teilbereich befindet.

12. Verfahren nach einem der vorhergehenden Ansprüche 8 bis 11, wobei das Bestimmen, das Griffsignal zu ignorieren, Folgendes umfasst:
Identifizieren, ob es sich bei einem von dem Kommunikationsprozessor verwendeten Band um ein TDD-Band handelt, und
Bestimmen, das von dem Griffsensor in einem Downlink-Teilbereich erzeugte Griffsignal zu ignorieren, als Reaktion auf die Identifizierung, dass es sich bei dem von dem Kommunikationsprozessor verwendeten Band um ein TDD-Band handelt; und/oder Freigeben des Ruhemodus als Reaktion auf die Erzeugung des Griffsignals, falls die vorbestimmte Bedingung nicht erfüllt ist.

13. Verfahren nach einem der vorhergehenden Ansprüche 8 bis 12, wobei das Eintreten in den Ruhemodus Folgendes umfasst:
Eintreten in den Ruhemodus, falls ein Zeitraum, in dem keine Benutzereingabe erfasst wird, eine vorbestimmte Bedingung erfüllt.

## Revendications

1. Appareil électronique (100, 200, 300, 400) comprenant :
un capteur de préhension (330, 430) conçu pour générer un signal de préhension,
un processeur de communication (CP, communication processor) (340, 414),
un processeur d'application (AP, application processor) (330, 412) relié fonctionnellement au capteur de préhension et au processeur de communication, et
une mémoire sur laquelle sont stockées des instructions qui, lorsqu'elles sont exécutées sur le processeur d'application, amènent l'appareil électronique à :
déterminer s'il convient d'exécuter une réduction de puissance concernant le processeur de communication (340, 430) afin de réduire la puissance de transmission,
lorsqu'il est déterminé d'exécuter la réduction de puissance :
interrompre un mode veille du processeur d'application,
transmettre le signal de préhension issu du capteur de préhension au processeur de communication, par le biais du processeur d'application ;
commander au processeur de communication d'exécuter la réduction de puissance en fonction du signal de préhension, et
lorsqu'il est déterminé de ne pas exécuter la réduction de puissance :
déterminer, en fonction de la satisfaction d'une condition prédéterminée, d'ignorer le signal de préhension généré par le capteur de préhension, et
maintenir le mode veille du processeur d'application.

2. Appareil électronique (100, 200, 300, 400) selon la revendication 1, dans lequel les instructions, lorsqu'elles sont exécutées sur le processeur d'application, amènent l'appareil électronique à :
identifier si une bande en cours d'utilisation est une bande à laquelle la réduction de puissance n'est pas appliquée, et
déterminer d'ignorer le signal de préhension généré par le capteur de préhension en réaction au fait que la bande a été identifiée comme étant une bande à laquelle la réduction de puissance n'est pas appliquée.

3. Appareil électronique (100, 200, 300, 400) selon l'une quelconque des revendications précédentes, dans lequel les instructions, lorsqu'elles sont exécutées sur le processeur d'application, amènent l'appareil électronique à.
identifier, à l'aide du processeur de communication, si la zone d'un emplacement actuel est une zone de champ électrique intense, et
déterminer d'ignorer le signal de préhension généré par le capteur de préhension en réaction au fait que la zone de l'emplacement actuel a été identifiée comme étant une zone de champ électrique intense.

4. Appareil électronique (100, 200, 300, 400) selon l'une quelconque des revendications précédentes, dans lequel les instructions, lorsqu'elles sont exécutées sur le processeur d'application, amènent l'appareil électronique à :
identifier si l'appareil électronique se trouve dans une section C-DRX, et
déterminer d'ignorer le signal de préhension généré par le capteur de préhension en réaction au fait que l'appareil électronique a été identifié dans une section C-DRX.

5. Appareil électronique (100, 200, 300, 400) selon l'une quelconque des revendications précédentes, dans lequel les instructions, lorsqu'elles sont exécutées sur le processeur d'application, amènent l'appareil électronique à :
identifier si une bande utilisée par le processeur de communication est une bande TDD, et
déterminer d'ignorer le signal de préhension généré par le capteur de préhension dans une section de liaison descendante en réaction au fait que la bande utilisée par le processeur de communication a été identifiée comme étant une bande TDD.

6. Appareil électronique (100, 200, 300, 400) selon l'une quelconque des revendications précédentes, dans lequel les instructions, lorsqu'elles sont exécutées sur le processeur d'application, amènent l'appareil électronique à interrompre le mode veille en réaction à la génération du signal de préhension si la condition prédéterminée n'est pas satisfaite.

7. Appareil électronique (100, 200, 300, 400) selon l'une quelconque des revendications précédentes, dans lequel les instructions, lorsqu'elles sont exécutées sur le processeur d'application, font entrer le dispositif électronique en mode veille si une période pendant laquelle aucune entrée utilisateur n'est détectée satisfait une condition prédéterminée.

8. Procédé d'amélioration de la consommation en courant d'un appareil électronique (100, 200, 300, 400), le procédé comprenant les opérations consistant à :
déterminer s'il convient d'exécuter une réduction de puissance concernant le processeur de communication (340, 430) pour réduire la puissance de transmission,
lorsqu'il est déterminé d'effectuer la réduction de puissance :
interrompre un mode veille du processeur d'application,
transmettre le signal de préhension issu du capteur de préhension au processeur de communication par le biais du processeur d'application,
commander au processeur de communication d'exécuter la réduction de puissance en réduisant la puissance de transmission en fonction du signal de préhension, et
lorsqu'il est déterminé de ne pas exécuter la réduction de puissance :
déterminer, en fonction de la satisfaction d'une condition prédéterminée, d'ignorer le signal de préhension généré par le capteur de préhension, et
maintenir le mode veille du processeur d'application.

9. Procédé selon la revendication 8, dans lequel la détermination d'ignorer le signal de préhension comprend :
l'identification du fait ou non qu'une bande en cours d'utilisation est une bande à laquelle la réduction de puissance n'est pas appliquée, et
la détermination d'ignorer le signal de préhension généré par le capteur de préhension en réaction au fait que la bande a été identifiée comme étant une bande à laquelle la réduction de puissance n'est pas appliquée.

10. Procédé selon l'une quelconque des revendications précédentes 8 et 9, dans lequel la détermination d'ignorer le signal de préhension comprend :
l'identification, à l'aide du processeur de communication, du fait ou non que la zone d'un emplacement actuel est une zone de champ électrique intense, et
la détermination d'ignorer le signal de préhension généré par le capteur de préhension en réaction au fait que la zone de l'emplacement actuel a été identifiée comme étant une zone de champ électrique intense.

11. Procédé selon l'une quelconque des revendications précédentes 8 à 10, dans lequel la détermination d'ignorer le signal de préhension comprend :
l'identification du fait que l'appareil électronique se trouve ou non dans une section C-DRX, et
la détermination d'ignorer le signal de préhension généré par le capteur de préhension en réaction au fait que l'appareil électronique a été identifié dans une section C-DRX.

12. Procédé selon l'une quelconque des revendications précédentes 8 à 11, dans lequel la détermination d'ignorer le signal de préhension comprend :
l'identification du fait qu'une bande utilisée par le processeur de communication est une bande TDD ou non, et
la détermination d'ignorer le signal de préhension généré par le capteur de préhension dans une section de liaison descendante en réaction au fait que la bande utilisée par le processeur de communication a été identifiée comme étant une bande TDD ; et/ou
l'interruption du mode veille en réaction à la génération du signal de préhension si la condition prédéterminée n'est pas satisfaite.

13. Procédé selon l'une quelconque des revendications précédentes 8 à 12, dans lequel l'entrée en mode veille comprend :
une entrée en mode veille si une période pendant laquelle aucune entrée utilisateur n'est détectée satisfait une condition prédéterminée.
